# FASCICULE DE BREVET EUROPEEN

(11) **EP 0 850 900 B1**
(45) Date de publication et mention de la délivrance du brevet: **10.10.2001**
(21) Numéro de dépôt: 97121854.0
(22) Date de dépôt: 11.12.1997
(51) Int. Cl.: C04B 41/87, C04B 35/486, G04B 37/22

(54) **Article à base de zircone, utilisation comme élément d'habillement, résistant à l'usure pour une montre-bracelet d'un tel article et procédé d'obtention d'un tel article**
Gegenstand auf der Basis von Zirkonoxid, seine Verwendung als verschleissbeständiges Armbanduhrenteil und Verfahren zu seiner Herstellung
Zirconia based article, its use as wear resistant part of a wristwatch and method for its production

(30) Priorité: 23.12.1996 EP 96120856
(43) Date de publication de la demande: 01.07.1998
(73) Titulaire: The Swatch Group Management Services AG, 2501 Biel (CH)
(72) Inventeur: Magnin, Pierre, 1053-Cugy (CH); Michel, Béatrice, 1588 Montet sur Cudrefin (CH)
(74) Mandataire: Ravenel, Thierry Gérard Louis

(56) Documents cités:
- DE-A- 3 812 428
- PATENT ABSTRACTS OF JAPAN vol. 014, no. 431 (C-0759), 17 septembre 1990 & JP 02 167875 A (TORAY IND INC), 28 juin 1990, & DATABASE WPI Week 9032 Derwent Publications Ltd., London, GB; AN 90-242230 & JP 02 167 857 (TORAY) , 28 juin 1990
- DATABASE WPI Section Ch, Week 8348 Derwent Publications Ltd., London, GB; Class A81, AN 83-830509 XP002031841 & JP 58 181 766 A (TORAY IND INC) , 24 octobre 1983
- DATABASE WPI Section Ch, Week 7838 Derwent Publications Ltd., London, GB; Class M13, AN 78-6753A XP002058734 & JP 53 092 376 A (SUWA SEIKOSHA KK) , 14 août 1978
- DATABASE WPI Week 8230 Derwent Publications Ltd., London, GB; AN 82-62489e XP002031842 & JP 57 098 671 A (SUWA SEIKOSHA KK) , 18 juin 1982
- D.L.COCKE ET AL.: APPLIED SURFACE SCIENCE, vol. 31, - 31 décembre 1988 AMSTERDAM,NL, pages 471-476, XP002031840

## Description

La présente invention concerne un article à base de zircone, notamment frittée, et en particulier un tel article dont la structure chimique est transformée sur une partie de son épaisseur pour conférer à cet article une surface extérieure ayant un aspect métallique. L'invention concerne également une utilisation, comme élément d'habillement d'une montre-bracelet, d'un tel article, en particulier pour réaliser des éléments de construction de boîtes de montre ou de bracelets. La présente invention concerne enfin un procédé d'obtention d'un tel article.

Parmi tous les matériaux connus, les métaux sont très largement utilisés à cause de certaines propriétés très intéressantes : grande résistance mécanique, ténacité élevée, conductivité électrique, etc. En outre, leur éclat caractéristique est très recherché pour les applications décoratives. Leur dureté est toutefois inférieure à celle des céramiques, ce qui peut conduire à une usure importante dans de nombreuses conditions d'utilisation courantes, par exemple, lorsque ces matériaux sont utilisés pour réaliser des pièces d'habillage d'horlogerie comme des boîtes de montre ou des bracelets.

Pour cette raison, on a depuis longtemps cherché à augmenter la dureté des métaux. Les procédés de métallurgie traditionnels (trempe, durcissement structural) ne permettent toutefois pas d'atteindre les très grandes duretés, c'est-à-dire supérieures à 1'000 HV (dureté Vickers), nécessaires pour certaines applications, telles que les outils de coupe ou les pièces décoratives inrayables.

Pour ces applications, on a cherché à augmenter encore la dureté des métaux par addition de particules très dures, en réalisant des composites biphasés constitués d'une phase métallique enrobant des particules dures, qui occupent fréquemment la majeure partie du volume du matériau. Un certain nombre de matériaux de ce type ont été développés et sont aujourd'hui communément utilisés à l'échelon industriel. On les nomme généralement "métal dur" lorsque les particules dures utilisées sont constituées par exemple de carbure de tungstène, et "cermet" lorsqu'elles sont en matière céramique, par exemple en carbonitrure de titane.

Tous ces matériaux ont toutefois en commun le fait qu'ils comportent une phase métallique distincte qui peut limiter leur résistance à la corrosion et leurs propriétés mécaniques à haute température.

De plus, cette phase métallique utilisée comme liant contient toujours du nickel ou du cobalt, toutes les tentatives pour substituer d'autres métaux à ces éléments ayant échoué jusqu'ici. Toutefois, l'utilisation de cette phase métallique avec le nickel et le cobalt, dans des applications qui conduisent à un contact prolongé avec la peau, comme par exemple les applications dans l'horlogerie et la bijouterie, doivent être évitées car ces éléments sont connus pour provoquer fréquemment des allergies.

Enfin, ces matériaux sont généralement difficiles à mettre en forme, ce qui constitue une limitation importante lors de la fabrication de pièces d'habillage pour l'horlogerie ou de pièces de bijouterie - de formes souvent complexes - et rend leur coût très élevé.

Le document JP-A-02 167875 décrit un procédé pour modifier une céramique à base de zircone (ZrO₂) dans le but de modifier, d'une part, la dureté de celle-ci et d'autre part, de lui conférer une couleur noire ou gris-noire. Pour ce faire, il est proposé d'introduire une pièce en zircone préalablement chauffée dans une enceinte dans laquelle on crée un plasma, de préférence, à micro-ondes à partir d'un mélange de gaz comprenant de l'hydrogène et un hydrocarbure ou du CO de sorte que la couche superficielle de la céramique se transforme en une forme de carbure de zirconium (ZrC) d'aspect noir ou gris-noir. La céramique ainsi modifiée est ensuite utilisée pour réaliser des outils de coupe et des pièces de machines.

L'invention a donc pour but de remédier aux inconvénients de l'art antérieur en fournissant un article réalisé à base de zircone, notamment frittée, présentant toutes les propriétés intéressantes des pièces en céramique conventionnelle (dureté, facilité de mise en forme, absence d'effet allergène, etc.) tout en présentant l'éclat de pièces métalliques.

L'invention a également pour but d'utiliser de façon avantageuse certaines propriétés du carbure de zirconium obtenu par transformation superficielle de la zircone à des fins esthétiques et décoratives dans le cadre d'application au domaine horloger.

L'invention a également pour but de fournir un procédé d'obtention d'un tel article en zircone qui puisse être facilement industrialisé et qui permette d'obtenir ces articles à des cadences et à des coûts compatibles avec les besoins du marché.

A cet effet, l'invention a donc pour objet un article à base de zircone ayant un coeur en ZrO2 et/ou en ZrO2 partiellement réduit caractérisé en ce qu'il comprend, sur au moins une partie de sa surface, une couche superficielle venant de matière avec ledit article, l'épaisseur de ladite couche superficielle comprenant une pluralité de régions dont une région extérieure est formée de carbure de zirconium ayant un éclat métallique.

Selon une caractéristique préférée de l'article selon l'invention, la couche superficielle comprend une région de transition située entre le coeur et la région extérieure, ladite région de transition comprenant du carbure de zirconium sous-stoechiométrique et des oxycarbures de zirconium.

On remarque donc que la composition chimique de la couche superficielle varie en fonction de la profondeur mesurée à partir de la surface de l'élément d'habillement et passe de façon continue, c'est à dire sans solution de continuité, du carbure de zirconium stoechiométrique (ZrC) à une région de transition comprenant du carbure de zirconium sous-stoechiométrique et des oxycarbures de zirconium.

Selon une autre caractéristique préférée de l'invention, la teneur en carbone du carbure de zirconium sous-stoechiométrique dans la région de transition diminue avec la profondeur tandis que la teneur en oxygène des oxycarbures augmente avec la profondeur.

La région de transition comprend donc du carbure de zirconium sous-stoechiométrique dont la teneur en carbone diminue graduellement lorsque l'on progresse vers le coeur de l'article alors que la présence d'oxygène augmente progressivement sous la forme de composés du type d'oxycarbures de zirconium (ZrOₓC_{y}), pour atteindre progressivement le coeur de l'article qui est constitué essentiellement de zircone partiellement réduite du type ZrO₂₋ₓ et/ou de zircone (ZrO₂). On comprendra bien entendu que la transition entre ces diverses régions se fait graduellement, la quantité d'un composé d'une région supérieure diminuant au profit d'un composé d'une couche inférieure.

Une analyse chimique de la couche superficielle par des techniques de mesure RBS-ERDA a permis de mettre en évidence, en fonction de la profondeur à partir de la surface de l'article, les concentrations relatives de zirconium, de carbone et d'oxygène correspondant aux composés chimiques précités.

L'invention a également pour objet un procédé d'obtention d'un article en zircone ayant un coeur en ZrO2 et/ou en ZrO2 partiellement réduit, fini ou semi-fini, ayant un aspect extérieur métallique, caractérisé en ce qu'il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange d'hydrogène, d'un gaz neutre, et de traces de carbone, et
- maintenir ledit article dans le plasma pendant un temps d'environ 15 à 240 minutes, la température moyenne de l'article s'établissant dans ces conditions entre environ 600 et 1'300°C.

Pour réaliser de tels articles, on a commencé par réaliser selon la technologie traditionnelle une pièce en céramique conventionnelle présentant toutes les propriétés recherchées, mais sans caractère métallique. On a ensuite soumis cette pièce au procédé selon l'invention afin de transformer la structure cristallographique de sa surface en y formant une couche superficielle comprenant notamment une région extérieure constitué de carbure de zirconium.

La région extérieure de la couche superficielle de l'élément d'habillement en zircone transformée selon le procédé de l'invention confère ainsi à cet élément les caractéristiques optiques d'un carbure de zirconium d'aspect métallique.

En effet, une analyse par diffraction aux rayons X rasants a montré que la structure de la couche superficielle qui avait été transformée en surface présentait la structure cristallographique correspondant à celle du carbure de zirconium.

Une analyse par diffraction aux rayons X standard a montré que la structure cristallographique du coeur de la pièce correspondait à celle de la zircone tétragonale.

Les articles obtenus par ce procédé acquièrent, certaines nouvelles propriétés, notamment une conductibilité électrique et un éclat métallique tout en conservant les propriétés des céramiques, en particulier leur très grande dureté.

A la grande différence des "métaux durs" et des "cermets" connus, les articles en zircone selon l'invention ne contiennent pas de phase métallique.

L'invention a également pour objet l'utilisation comme élément d'habillement de montre-bracelet résistant à l'usure, d'une céramique ayant un coeur en ZrO2 et/ou en ZrO2 partiellement réduit, et qui comprend, sur au moins une partie de sa surface, une couche superficielle venant de matière avec ledit élément, l'épaisseur de ladite couche superficielle comprenant une pluralité de régions dont une région extérieure est formée de carbure de zirconium ayant un éclat métallique.

D'autres caractéristiques et avantages de l'invention seront mieux compris ci-après à l'aide de la description suivante d'un exemple de réalisation d'un article en zircone ayant un aspect extérieur métallique avec son procédé d'obtention selon l'invention, donnée à titre purement illustratif et faite en référence aux dessins annexés dans lesquels :
- les figures 1 et 2 sont des spectres de diffraction de rayons X respectivement rasants (structure de la surface) et standards (structure du coeur) à partir de mesures sur un article selon l'invention; et
- la figure 3 représente deux spectres de réflexion respectivement d'un carbure de zirconium et d'un carbure de zirconium sous-stoechiométrique donnés à titre de référence ainsi que des points de mesures effectuées sur un article de l'invention.

A titre d'exemple, on se munit d'un objet de départ formé par un article en zircone ayant une configuration cristallographique tétragonale (oxyde de zirconium, ZrO₂) de couleur blanche et qui est réalisé selon les techniques usuelles de fabrication d'articles en céramique, par exemple par frittage.

Cet article peut être un produit fini ayant la forme finale dans laquelle il va être utilisé, par exemple une pièce de forme généralement parallélipipédique ayant déjà subi un polissage miroir et destinée à constituer un élément de l'habillement d'une montre, par exemple un maillon de bracelet.

Bien entendu, le cas échéant, l'article peut être un produit semi-fini sur lequel des opérations d'usinage ultérieures pourront être réalisées afin d'adapter cet article à son utilisation finale.

Cet article est ensuite introduit dans une enceinte dans laquelle on crée un plasma obtenu à partir de l'ionisation d'un mélange d'hydrogène, d'un gaz neutre et de traces de carbone. Ce plasma est obtenu par exemple à l'aide d'une décharge électrique.

Selon la méthode utilisée pour obtenir le plasma, l'utilisation de l'argon comme gaz neutre est avantageuse.

Les traces de carbone utilisées pour former le plasma peuvent être obtenues à partir d'hydrocarbures tels que le méthane, l'acétylène, l'éthane ou un mélange de ces derniers. On veillera toutefois à ce qu'au cours du procédé, les concentrations relatives des différents constituants du plasma soient telles qu'il n'y ait pas formation de diamant à la surface de l'article.

L'article est maintenu dans le plasma pendant une durée comprise entre 15 et 240 minutes et de préférence 150 minutes. La température moyenne de l'article au cours du traitement de ce dernier varie entre 600 et 1'300°C selon les paramètres (temps, composition du mélange gazeux, débits, etc ...) du procédé.

Après cette dernière opération, l'article présente l'éclat métallique du carbure de zirconium tout en conservant une très grande dureté superficielle indispensable à l'obtention d'un article insensible à l'usure dans des conditions d'utilisation normale.

Un point essentiel du procédé est qu'il s'agit d'une transformation de l'article sur une faible épaisseur, de l'ordre de 300 à 1'000 nm, la zircone (oxyde de zirconium) dans la région extérieure étant transformée en carbure de zirconium ayant un aspect métallique. Il s'agit donc d'une modification superficielle de la structure de la zircone en une nouvelle structure cristallographique correspondant à celle du carbure de zirconium et non d'un revêtement rapporté susceptible d'être arraché ou de se désolidariser de la surface de l'article, notamment lorsque celui-ci est soumis à des conditions d'usure importante.

Plus particulièrement, la région extérieure de la couche superficielle qui présente la structure du carbure de zirconium s'étend à partir de la surface sur une profondeur comprise entre 20 et 150 nm.

La région de transition se trouvant entre le coeur de l'article et la région extérieure comprend du carbure de zirconium sous-stoechiométrique du type ZrC_{1-y}. La sous-stoechiométrie du carbure de zirconium augmente progressivement (la teneur en carbone diminuant) à mesure que l'on se rapproche du coeur de l'article tandis qu'apparaît progressivement, à partir d'une certaine profondeur, une quantité grandissante d'oxygène sous la forme d'oxycarbure de zirconium.

On atteint ensuite le coeur de la pièce qui est constitué essentiellement de zircone partiellement réduite du type ZrO₂₋ₓ et/ou de zircone ZrO₂.

Le procédé selon l'invention modifie donc non seulement la surface mais aussi le coeur de l'article ou une partie de ce coeur - qui se transforme en ZrO₂₋ₓ-selon les dimensions de l'article, ce coeur présentant alors une couleur grise. De la sorte, de légères rayures de la surface ne conduisent pas à des marques visibles sur l'article.

Les hydrocarbures qui sont ajoutés en petite quantité au mélange d'hydrogène et de gaz neutre et qui sont utilisés pour former le plasma conduisent à un temps de traitement relativement court, de l'ordre de 150 minutes et à une meilleure reproductibilité du procédé. Cela rend le procédé selon l'invention exploitable aisément de façon industrielle.

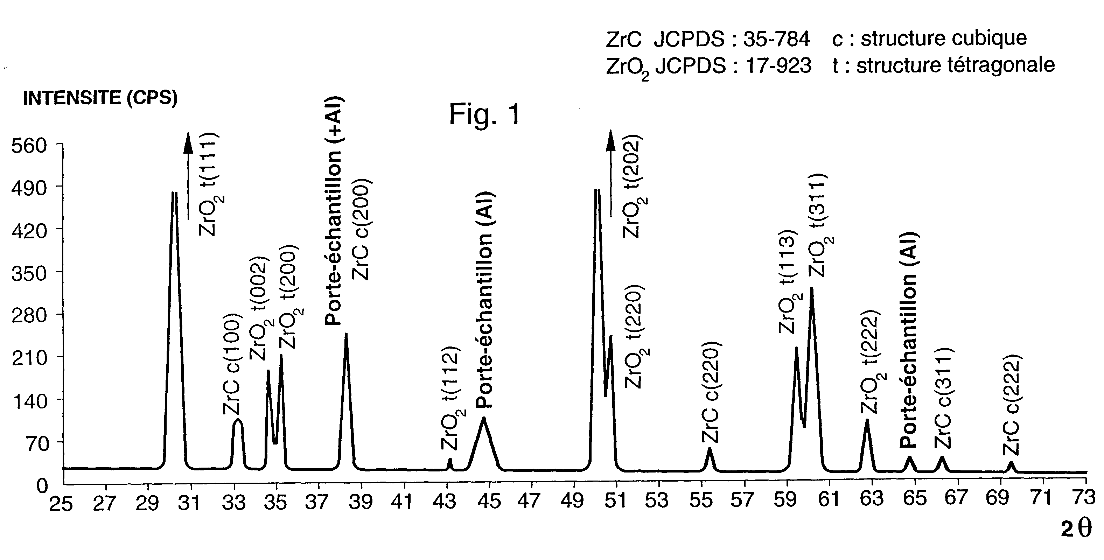

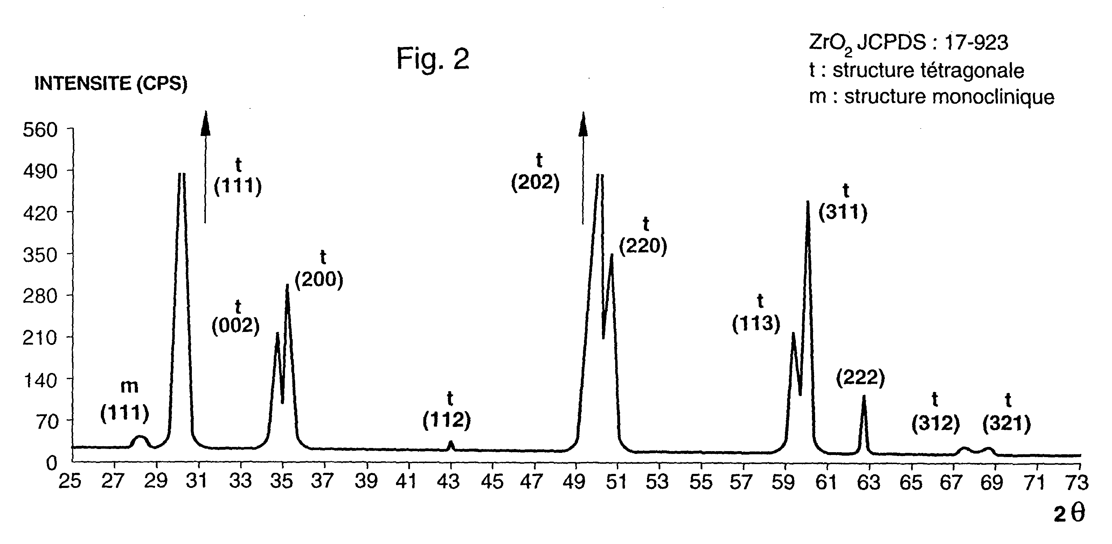

La structure de la couche superficielle de l'article en zircone transformée en surface a pu être mise en évidence par les spectres de diffraction obtenus avec des rayons X rasants alors que la structure du coeur a été obtenue par des techniques standard de diffraction de rayons X. Dans ces spectres, visibles respectivement aux figures 1 et 2, on reconnaît les pics caractéristiques du carbure de zirconium et de la zircone.

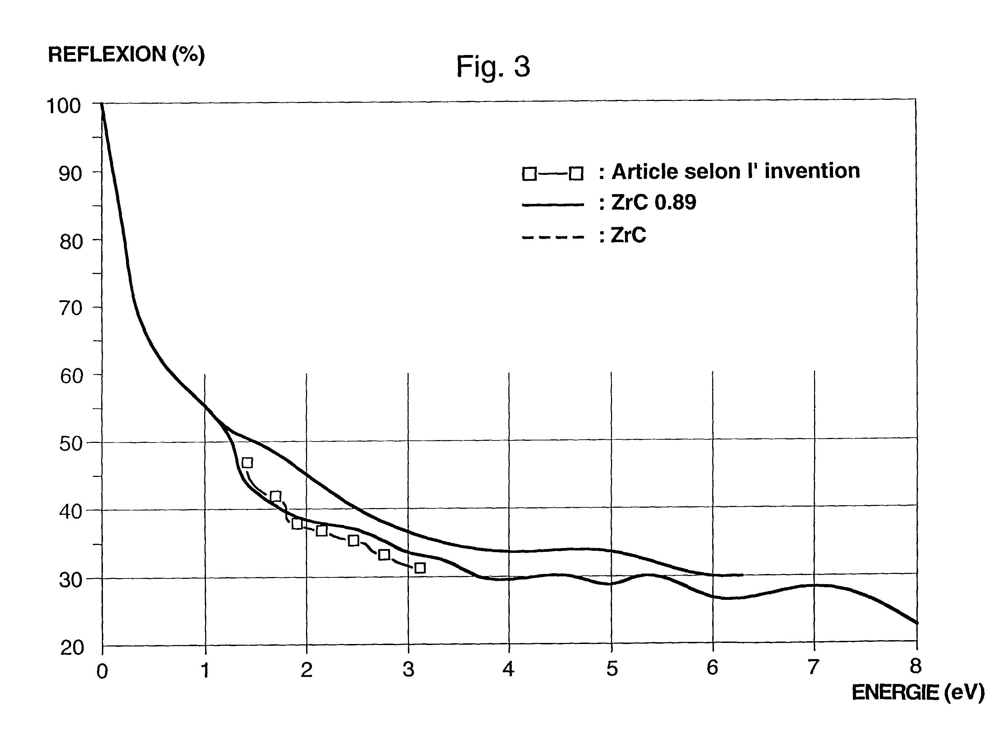

En se référant maintenant à la figure 3, on voit des courbes de réflexion de la lumière dans le domaine des longueurs d'ondes visibles à la surface d'un article réalisées respectivement en carbure de zirconium et en carbure de zirconium sous-stoechiométrique, à savoir en ZrC_{0,89}. Ces deux courbes sont tirées de l'article "Electrical Properties of Single Cristallin Zirconium Carbide" de F.A. Modine, T. H. Haywood et C. Y. Allison publié dans la "Physical Review B", volume 32 du 15 décembre 1985, page 7744 (figure 3). Des résultats de mesures analogues faites sur un article selon l'invention ont été incorporés sous forme de points de mesure discrets dans la figure, d'où il ressort clairement que le spectre de réflexion des articles selon l'invention correspond bien à celui d'une couche de ZrC stoechiométrique ou légèrement sous-stoechiométrique (figure 3).

La Demanderesse a également effectué des mesures de résistivité électrique sur la couche superficielle de l'article selon l'invention. Ces mesures ont conduit à des valeurs de résistivité de l'ordre de 250 µΩcm. Ces valeurs sont comparables à celles données dans la littérature pour le carbure de zirconium ZrC sensiblement stoechiométrique. La demanderesse s'est référée pour ces valeurs de résistivité à l'article de V.A. Petrov et al., publié dans la revue "High Temperatures - High Pressures" en 1981, volume 13, page 770.

Il résulte de ce qui précède que le procédé selon l'invention permet de réaliser des articles, notamment décoratifs d'aspect métallique, cumulant certaines des caractéristiques des céramiques et des métaux.

Il est ainsi possible d'obtenir des articles décoratifs d'une grande dureté, présentant un aspect et un éclat métallique particulièrement esthétiques, faciles à mettre en forme et non susceptibles de provoquer des réactions allergiques avec la peau du porteur. De la sorte, ces articles sont parfaitement adaptés à des utilisations en tant qu'articles décoratifs et en particulier en tant qu'éléments de construction de bracelets ou de boîtes pour pièces d'horlogerie.

## Revendications

1. Article à base de zircone ayant un coeur en ZrO2 et/ou en ZrO2 partiellement réduit **caractérisé en ce qu'**il comprend, sur au moins une partie de sa surface, une couche superficielle venant de matière avec ledit article, l'épaisseur de ladite couche superficielle comprenant une pluralité de régions dont une région extérieure est formée de carbure de zirconium ayant un éclat métallique.

2. Article selon la revendication 1, **caractérisé en ce que** la couche superficielle comprend une région de transition située entre le coeur et la région extérieure, ladite région de transition comprenant du carbure de zirconium sous-stoechiométrique et des oxycarbures de zirconium.

3. Article selon la revendication 2, **caractérisé en ce que** la teneur en carbone du carbure de zirconium sous-stoechiométrique dans la région de transition diminue avec la profondeur tandis que la teneur en oxygène des oxycarbures augmente avec la profondeur.

4. Article selon la revendication 1 ou 2, **caractérisé en ce que** l'épaisseur de la couche superficielle est comprise environ entre 300 et 1'000 nm.

5. Article selon l'une des revendications précédentes, **caractérisé en ce que** l'épaisseur de la région extérieure de carbure de zirconium est comprise environ entre 20 et 150 nm.

6. Utilisation comme élément d'habillement pour une montre-bracelet, résistant à l'usure d'une céramique ayant un coeur en ZrO2 et/ou en ZrO2 partiellement réduit, et qui comprend, sur au moins une partie de sa surface, une couche superficielle venant de matière avec ledit élément, l'épaisseur de ladite couche superficielle comprenant une pluralité de régions dont une région extérieure est formée de carbure de zirconium ayant un éclat métallique.

7. Procédé d'obtention d'un article fini ou semi-fini à base de zircone ayant un coeur en ZrO2 et/ou en ZrO2 partiellement réduit, l'article ayant un aspect extérieur métallique, **caractérisé en ce qu'**il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange d'hydrogène, d'un gaz neutre et de traces de carbone, et
- maintenir ledit article dans le plasma pendant un temps d'environ 15 à 240 minutes, la température moyenne de l'article s'établissant dans ces conditions entre 600 et 1'300°C.

8. Procédé selon la revendication 7, **caractérisé en ce que** le gaz neutre est l'argon.

9. Procédé selon l'une des revendications 7 ou 8, **caractérisé en ce que** les traces de carbone sont obtenues à partir d'au moins un hydrocarbure introduit dans ladite enceinte, l'hydrocarbure étant choisi parmi le méthane, l'acétylène et l'éthane ou un mélange de ces derniers.

## Claims

1. Zirconia based ceramic article having a core made of ZrO2 and/or partially reduced ZrO2, **characterized in that** it includes, over at least part of its surface, a superficial layer integral with said article, the thickness of said superficial layer including a plurality of regions of which one external region is formed of zirconium carbide having a metallic brilliance.

2. Article according to claim 1, **characterized in that** the superficial layer includes a transition region situated between the core and the external region, said transition region including sub-stoichiometric zirconium carbide and zirconium oxycarbides.

3. Article according to claim 2, **characterized in that** the carbon content of the sub-stoichiometric zirconium carbide in the transition region decreases with the depth while the oxygen content of the oxycarbides increases with the depth.

4. Article according to claim 1 or 2, **characterized in that** the thickness of the superficial layer is between approximately 300 and 1,000 nm.

5. Article according to any of the preceding claims, **characterized in that** the thickness of the external region of zirconium carbide is approximately between 20 and 150 nm.

6. Use of a ceramic material having a core of ZrO2 and/or partially reduced ZrO2 as a wear resistant exterior part for a wristwatch, said part including, over at least part of its surface, a superficial layer integral with said part, the thickness of said superficial layer including a plurality of regions of which one external region is formed of zirconium carbide having a metallic brilliance.

7. Method for obtaining a finished or semi-finished zirconia based ceramic article having a core of ZrO2 and/or partially reduced ZrO2, the article having a metallic external appearance, **characterized in that** it includes the following steps, consisting of:
- providing at least one zirconia ceramic article previously shaped into its finished or semi-finished shape;
- placing said article in a reaction vessel in which a plasma is generated from a mixture of hydrogen, an inert gas and traces of carbon; and
- maintaining said article in the plasma for a period of time of approximately 15 to 240 minutes, the average temperature of the article being settled in these conditions between 600 and 1,300 °C

8. Method according to claim 7, **characterized in that** the inert gas is argon.

9. Method according to one of claims 7 or 8, **characterized in that** the traces of carbon are obtained from at least one hydrocarbon gas injected into said vessel, the hydrocarbon gas being selected from methane, acetylene and ethane or a mixture of these latter.

## Patentansprüche

1. Gegenstand auf Zirkoniumoxid-Basis, der einen Kern aus ZrO₂ und/oder aus teilweise reduziertem ZrO₂ besitzt, **dadurch gekennzeichnet, daß** er wenigstens auf einem Teil seiner Oberfläche eine Oberflächenschicht aufweist, die einteilig mit dem Gegenstand ausgebildet ist, wobei die Oberflächenschicht in Dickenrichtung mehrere Zonen umfaßt, wobei eine äußere Zone aus Zirkonium-carbid mit metallischem Glanz gebildet ist.

2. Gegenstand nach Anspruch 1, **dadurch gekennzeichnet, daß** die Oberflächenschicht eine Übergangszone umfaßt, die sich zwischen dem Kern und der äußeren Zone befindet, wobei die Übergangszone unter-stöchiometrisches Zirkonium-Carbid sowie Zirkonium-Oxycarbide umfaßt.

3. Gegenstand nach Anspruch 2, **dadurch gekennzeichnet, daß** der Gehalt an Kohlenstoff des unterstöchiometrischen Zirkonium-Carbids in der Übergangszone in Tiefenrichtung abnimmt, während der Gehalt an Sauerstoff der Oxycarbide in Tiefenrichtung zunimmt.

4. Gegenstand nach Anspruch 1 oder 2, **dadurch gekennzeichnet, daß** die Dicke der Oberflächenschicht im Bereich von etwa 300 bis etwa 1000 nm liegt.

5. Gegenstand nach einem der vorhergehenden Ansprüche, **dadurch gekennzeichnet, daß** die Dicke der äußeren Zone aus Zirkonium-Carbid im Bereich von etwa 20 bis etwa 150 nm liegt.

6. Verwendung einer Keramik als verschleißbeständiges Verkleidungselement für eine Armbanduhr, wobei die Keramik einen Kern aus ZrO₂ und/oder teilweise reduziertem ZrO₂ besitzt und auf wenigstens einem Teil ihrer Oberfläche eine Oberflächenschicht, die einteilig mit dem Element ausgebildet ist, umfaßt, wobei die Dicke der Oberflächenschicht mehrere Zonen umfaßt, wovon eine äußere Zone aus Zirkonium-Carbid mit Metallglanz gebildet ist.

7. Verfahren zum Erhalten eines fertigen oder halbfertigen Gegenstandes auf Zirkoniumoxid-Basis, der einen Kern aus ZrO₂ und/oder teilweise reduziertem ZrO₂ besitzt, wobei der Gegenstand ein metallisches äußeres Aussehen hat, **dadurch gekennzeichnet, daß** es die Schritte umfaßt, die darin bestehen:
- wenigstens einen Gegenstand aus Zirkoniumoxid vorzusehen, der im voraus in seine fertige oder halbfertige Form gebracht worden ist;
- Anordnen des Gegenstandes in einem Behälter, in dem ein Plasma erzeugt wird, das aus einem Gemisch aus Wasserstoff, einem Neutralgas und Spuren von Kohlenstoff erhalten wird; und
- Halten des Gegenstandes im Plasma während einer Zeit von etwa 15 bis 240 Minuten, wobei die mittlere Temperatur des Gegenstandes unter diesen Bedingungen zwischen 600 und 1300 °C liegt.

8. Verfahren nach Anspruch 7, **dadurch gekennzeichnet, daß** das Neutralgas Argon ist.

9. Verfahren nach einem der Ansprüche 7 oder 8, **dadurch gekennzeichnet, daß** die Spuren von Kohlenstoff aus wenigstens einem Kohlenwasserstoff erhalten werden, der in den Behälter eingeleitet wird, wobei der Kohlenwasserstoff aus Methan, Acetylen und Ethan oder einem Gemisch dieser letzteren gewählt wird.
